# EUROPEAN PATENT APPLICATION

(11) **EP 3 007 083 A1**
(43) Date of publication of application: **13.04.2016**
(21) Application number: 14803930.8
(22) Date of filing: 20.05.2014
(51) Int. Cl.: G06F 17/30

(54) **RELATIONSHIP GRAPH INTERLINKAGE SYSTEM**

(30) Priority: 31.05.2013 JP 2013114985
(71) Applicant: Kyoto University, Kyoto-shi, Kyoto 606-8501 (JP); Kobe Digital Labo Inc., Kobe-shi Hyogo 650-0034 (JP)
(72) Inventor: SHINKUMA, Ryoich, Kyoto-shi Kyoto 606-8501 (JP); YAMAGUCHI, Kazuhiro, Kobe-Shi, Hyogo 6500034 (JP)
(74) Representative: Viering, Jentschura & Partner mbB Patent- und Rechtsanwälte
(86) International application number: PCT/JP2014/063269
(87) International publication number: WO 2014/192580

(57) **Abstract**

A relationship graph interlinkage system includes a plurality of relationship graph databases 20 which stores a plurality of relationship graphs respectively, a selected information acceptance unit 101 which accepts selected information from a terminal device 40 via a computer network, a relationship graph selection unit 102 which selects a plurality of the relationship graphs from the relationship graph databases based on the selected information, a relationship graph evaluation unit 103 which evaluates each relationship graph by measuring a parameter of the node contained in each relationship graph, a parameter evaluation unit 104 which evaluates he parameter of the node contained in each relationship graph evaluated by the relationship graph evaluation unit 103, an output node determination unit 105 which determines node to be output to a terminal device via a computer network based on a result of evaluation of the parameter by the parameter evaluation unit 104.

## Description

### Technical Field

The present invention relates to a relationship graph interlinkage system configured to mutually link a plurality of relationship graphs connecting a plurality of nodes with links.

### Background Art

Conventionally, in order to provide advanced services, it has been addressed to correlate detailed attribute information with individual data. On the other hand, attempts to apply relationships between data to services is being considered (see

Non-Patent Document 1). In particular, social relationships, such as, e.g., the relationship between persons and the relationship between the context of person movements and locations, has drawn attention, and the relationship of such data is expressed as a relationship graph.

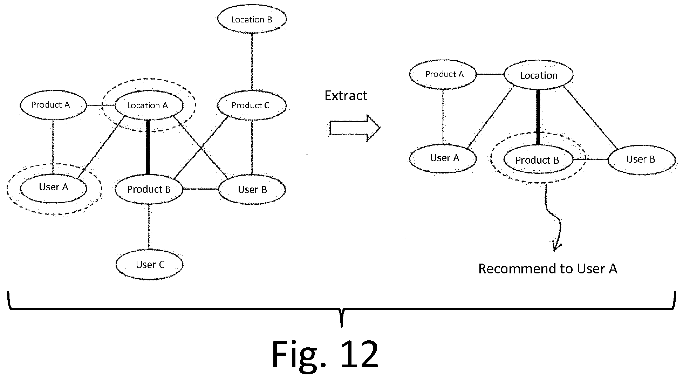

The aforementioned relationship graph denotes a graph which represents, as shown in Fig. 12, objects, such as, e.g., persons, articles, locations, and contents, as nodes, and also shows the presence or absence of the mutual relationships of the objects. Further, strength of a relationship between directly and mutually connected nodes is shown by a link length, and strength of the relationship between nodes connected via other node is shown by a path length.

In addition, by utilizing information observed in the real world or online as an input source, an object group contained in the input source is generated as a node. Also, links between nodes are created, and a small relationship graph (partial graph) is formed.

Further, one large relationship graph is generated by linking a plurality of partial graphs via a common node, and is held in a database (see Patent Document 1). It should be noted that when linking, the link length becomes shorter as the same link exists in a duplicated manner.

Further, the relationship graph held in the database is referenced and used for various applications. For example, when a relationship graph only for persons is formed using SNS (Social Networking Services) information as the input source, it is possible to present (recommend) a person having a short path length not directly linked to a certain person, as a future friend. For example, in the case of e-commerce (electronic commerce) using a mobile terminal, when forming a relationship graph from visiting histories to locations and purchase histories of products, when a certain consumer visits a certain location, it is possible to recommend a certain product having a short path length from the consumer and the location on the relationship graph.

### [Prior Art]

### [Non-patent Document]

[Non-patent Document 1] R. Shinkuma et al., "New Generation Information Network Architecture Based on Social Metric", IEICE Society Conference, Sept. 2010

### [Patent Document]

[Patent Document 1] Japanese Unexamined Laid-open Patent Application Publication No. 2013-45326

### [Summary of the Invention]

### [Problems to be solved by the Invention]

However, in a relationship graph input from different input sources, there were following problems for each relationship graph.

(1) Particle sizes of objects differ from each other. For example, an object at a location in the real world can be a particle size of latitude and longitude. In the case of on-line, there can be particle sizes up to about facility names.

(2) Time characteristics of link lengths differ from each other. For example, in a case in which the input source is for each minute and a case in which the input source is for each year, the change with respect to the time of the link length differs.

(3) Polarity of links differs. For example, links may sometimes have negative meanings, such as a relationship of drugs with bad interaction.

Therefore, even if relationship graphs (partial graphs) having different input sources are linked into one relationship graph, since the definitions of grain sizes and links are not unified, there were problems. For example, even if a path length from one node to another was measured, the measured value was uncertain whether it was significant or insignificant.

The present invention was made in view of the aforementioned problems and aims to provide a relationship graph interlinkage system capable of utilizing a plurality of relationship graphs in a mutually linked manner, resulting in an accurate presentation of products and/or services on the relationship graph to users.

### [Means for Solving the Problems]

In order to attain the aforementioned objects, the present invention provides a relationship graph interlinkage system configured to mutually link a plurality of relationship graphs connecting a plurality of node with links. The system includes a plurality of relationship graph databases configured to store a plurality of relationship graphs respectively, a selected information acceptance unit configured to accept selected information from a terminal device via a computer network, a relationship graph selection unit configured to select a plurality of the relationship graphs from the relationship graph databases based on the selected information accepted by the selected information acceptance unit, a relationship graph evaluation unit configured to evaluate each relationship graph by measuring a parameter of the node contained in each relationship graph selected by the relationship graph selection unit, a parameter evaluation unit configured to evaluate the parameter of the node contained in each relationship graph evaluated by the relationship graph evaluation unit, and an output node determination unit configured to determine a node to be output to the terminal device via the computer network based on a result of evaluation of the parameter by the parameter evaluation unit.

Further, the relationship graph evaluation unit can select a reference point node which becomes a reference point from nodes contained in the relationship graphs, and measure a distance from the reference point node to each predetermined node as a parameter. The relationship graph evaluation unit can create a node list showing each predetermined node and distances from the reference point node to each predetermined node in a manner as to be sorted by descending order or ascending order of the distance. At this time, e.g., when evaluating the distance of each node contained in each relationship graph evaluated by the relationship graph evaluation unit, the parameter evaluation unit mutually compares the node list of each relationship graph and extracts a node by subtracting an upper node in another node list from an upper node in one node list.

Further, the relationship graph evaluation unit can measure the number of each predetermined connection contained in the relationship graph as a parameter. Furthermore, the relationship graph evaluation unit can create a node list showing each node and the number of connections of each node in a manner as to be sorted by descending order or ascending order of the number. At this time, e.g., when evaluating the number of connections of each node contained in each relationship graph evaluated by the relationship graph evaluation unit, the parameter evaluation unit mutually compares the node list of each relationship graph and extracts a node which is larger in increase or decrease in the number of connections of another list with respect to the number of connections of one node list.

Further, the relationship graph evaluation unit can measure the reliability of each of the predetermined nodes contained in the relationship graphs as a parameter. Furthermore, the relationship graph evaluation unit can create a node list showing each node and the reliability in a manner as to be sorted by descending order or ascending order of the reliability. At this time, e.g., when evaluating the reliability of each node contained in the relationship graphs evaluated by the relationship graph evaluation unit, the parameter evaluation unit mutually evaluates that the relationship graph should not be employed when the reliability of each node is low.

Further, the relationship graph evaluation unit can evaluate each relationship graph selected by the relationship graph selection unit in parallel, and the parameter evaluation unit can evaluate mutually the parameter of the node contained in each relationship graph evaluated in parallel by the relationship graph evaluation unit.

It also can be configured such that the relationship graph evaluation unit evaluates one relationship graph selected by the relationship graph selection unit, and the parameter evaluation unit evaluates the parameter of the node contained in the one relationship graph evaluated by the relationship graph evaluation unit, and thereafter the relationship graph evaluation unit evaluates another relationship graph selected by the relationship graph selection unit based on a result of evaluation of the parameter of the node contained in the one relationship graph evaluated by the relationship graph evaluation unit, and the parameter evaluation unit evaluates the parameter of the node contained in the another of the relationship graph evaluated by the relationship graph evaluation unit.

### [Effects of the Invention]

According to the present invention, after evaluating each of the relationship graphs by measuring the parameter of the node contained in each of the relationship graphs, the parameter of the node contained in each of the relationship graphs is evaluated and the node to be output to a terminal device is determined based on the result of evaluation of the parameter. Therefore, a plurality of relationship graphs can be mutually linked and employed, which in turn can make it possible to accurately present products and/or services on the relationship graph to a user.

### [Brief Descriptions of the Drawings]

Fig. 1 shows an entire structure of a system model including the present system.
Fig. 2 shows a functional configuration of the present system.
Fig. 3 is a flow chart showing a flow of a parallel evaluation by a processing server of the present system.
Fig. 4 shows that the relationship graph is evaluated by a parameters of a distance from a reference point node to each node.
Fig. 5 shows that a relationship graph is evaluated by a parameter of the number of connections of each node.
Fig. 6 is a flow chart showing a flow of a serial evaluation of the relationship graph by a processing server.
Fig. 7 schematically shows a flow chart showing a flow of a serial evaluation by the processing server according to Example 1 and a node list.
Fig. 8 schematically shows a flow chart showing a flow of a parallel evaluation by the processing server according to Example 2 and a node list.
Fig. 9 schematically shows a flow chart showing a flow of a parallel evaluation by the processing server according to Example 3 and a node list.
Fig. 10 schematically shows a flow chart showing a flow of a serial evaluation by the processing server according to Example 4 and a node list.
Fig. 11 schematically shows a flow chart showing a flow of a serial evaluation by the processing server according to Example 5 and the node list.
Fig. 12 shows a relationship graph in which nodes are connected by links.

### [Embodiments for Carrying Out the Present Invention]

Hereinafter, some embodiments of a relationship graph interlinkage system according to the present invention (hereinafter referred to as "the present system") will be explained with reference to attached drawings.

### <FIRST EMBODIMENT>

### [Summary of the Entire Structure]

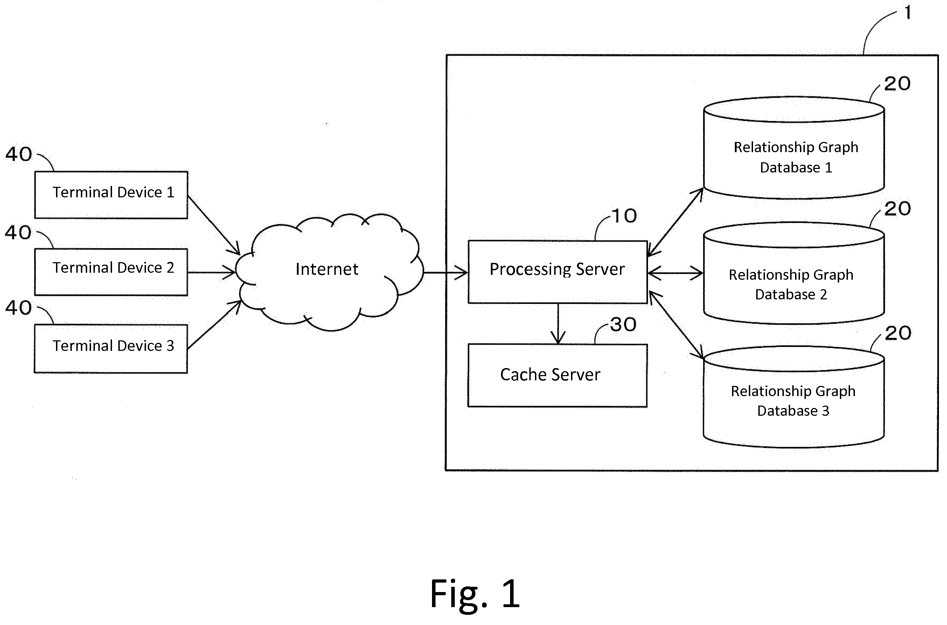

Fig. 1 shows an entire structure of a system model including the present system 1. The present system 1, as shown in Fig. 1, includes a processing server 10, a plurality of relationship graph databases 20, and a cache server 30.

Further, each function of the present system 1 functions when a computer program installed in a memory device of a computer functioning as the processing server 10 is executed by the computer. The computer program can be transferred and sold by being stored in a memory medium.

The processing server 10 is communicable with terminal devices 40 via a computer network, such as, e.g., the Internet. The terminal device 40 is not especially limited as long as it is a device, such as, e.g., a personal computer, a mobile phone, a smartphone, and other mobile terminals, that can be connected to a computer network.

The relationship graph database 20 is configured to store a plurality of relationship graphs in each database in a divided manner and includes three databases in this embodiment. The relationship graph represents objects, such as, e.g., persons, articles, locations, and contents, as nodes, and shows the presence or absence of a mutual relationship of the objects. Further, the strength of the relationship between the directly and mutually connected nodes is shown by a link length, and the strength of the relationship between the nodes connected via other nodes is shown by a path length. In addition, by making the information observed in the real world or online as an input source, the object group contained in the input source is generated as a node. Also, links between nodes are also generated, and small relationship graph (partial graph) is formed. Further, one large relationship graph is formed by linking the plurality of partial graphs via a common node. This is stored in the relationship graph database 20. It should be noted that when linking, the link length becomes shorter as the same link exists in a duplicated manner. The methods of forming these relationship graphs are specifically explained in the aforementioned Patent Document 1.

The cache server 30 is configured to store results of processing performed by the processing server 10 and to speed up the processing in the processing server 10.

### [Structure of Processing Server 10]

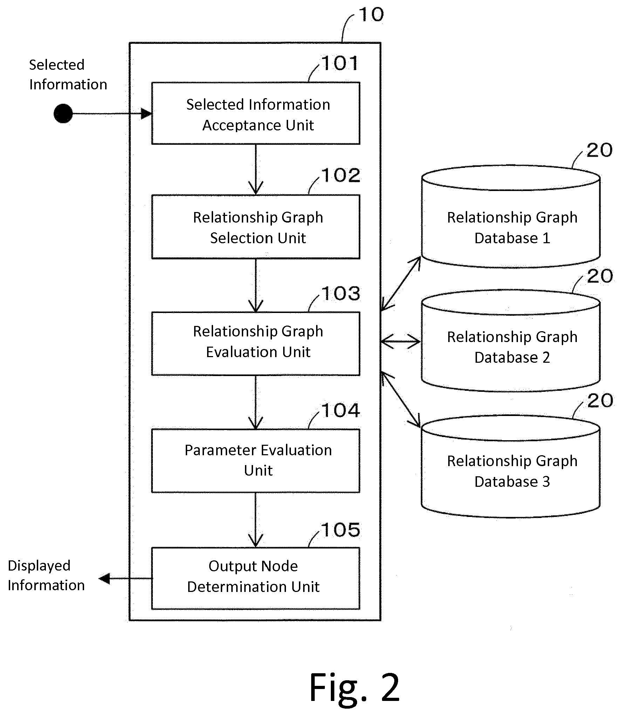

The processing server 10, as shown in Fig. 2, includes a selected information acceptance unit 101 for accepting predetermined selected information via a computer network from the terminal device 40, a relationship graph selection unit 102 for selecting at least two relationship graphs from each of the relationship graph databases 20, a relationship graph evaluation unit 103 for evaluating each relationship graph by measuring parameters of each node contained in each of the selected relationship graphs, a parameter evaluation unit 104 for evaluating the parameters of each node contained in each of the selected relationship graphs, and an output node determination unit 105 for determining the node to be output.

The selected information acceptance unit 101 is for accepting predetermined selected information via the computer network from the terminal device 40. This selected information is information selected relating to the relationship graph database 20 and the reference point node. For example, when a relationship graph C created using a record of goods eaten daily by a user as an input source and a relationship graph D formed using information from a website relating to poor compatibility of foods sent by a nutritionist as an input source, the relationship graphs C and D become the selected information of the relationship graphs. Further, when a user selects a food x that the user wants to eat at the moment, the food x becomes selected information of the reference point node of the relationship graph.

The relationship graph selection unit 102 selects at least two relationship graphs from each of the relationship graph databases 20 based on the selected information accepted by the selected information acceptance unit 101. For example, when the selected information acceptance unit 101 accepts the selected information of the aforementioned relationship graph C and relationship graph D, the relationship graph selection unit 102 selects the relationship graph C and the relationship graph D from each of the relationship graph databases 20.

The relationship graph evaluation unit 103 is for evaluating each of the relationship graphs by measuring parameters of nodes contained in each of the relationship graphs selected by the relationship graph selection unit 102. Specifically, the relationship graph evaluation unit 103 evaluates each of the relationship graphs by measuring one type or plural types of parameters, such as, e.g., the distance from a certain reference point node to a node, the number of node connections, and the reliability of the node, contained in each of the relationship graphs selected by the relationship graph selection unit 102, and quantitatively outputting the results of measurements of the parameters in the form of values, points, ranks, or their node lists. Further, when evaluating the relationship graph by these relationship graph evaluation units 103, there are a method for evaluating each relationship graph in parallel and a method for serially evaluating each relationship graph, which will be explained later.

The parameter evaluation unit 104 evaluates a parameter of a node contained in each relationship graph evaluated by the relationship graph evaluation unit 103. Specifically, the parameter evaluation unit 104 extracts a predetermined node as an output candidate node by evaluating the values, points, ranks, or their node lists of parameters of nodes quantitatively output by the relationship graph evaluation unit 103. For evaluating the parameter of node, for example, there are a method for extracting an upper node or a lower node as the output candidate node with the seize of the distance from a reference point node to a node, the amount of the number of connections of nodes, the level of the reliability of the node, and the temporal changes of the parameters of nodes, and a method for extracting a node having a predetermined relationship as the output candidate node by comparing each of the node lists. Further, for the evaluation of the relationship graph by these parameter evaluation units 104, the evaluation method differs according to the parallel evaluation method and the serial evaluation method of the aforementioned relationship graph evaluation unit 103, which will be explained later.

The output node determination unit 105 is for determining the node to be finally output based on the results of the evaluation of parameters of nodes by the relationship graph evaluation unit 103. The determined node is output to the terminal device 40 via a computer network after converting to the original object. Further, in determining the output node by the output node determination unit 105, all nodes evaluated by the relationship graph evaluation unit 103 can be determined to be the output node or a particularly important nods can be determined to be the output node.

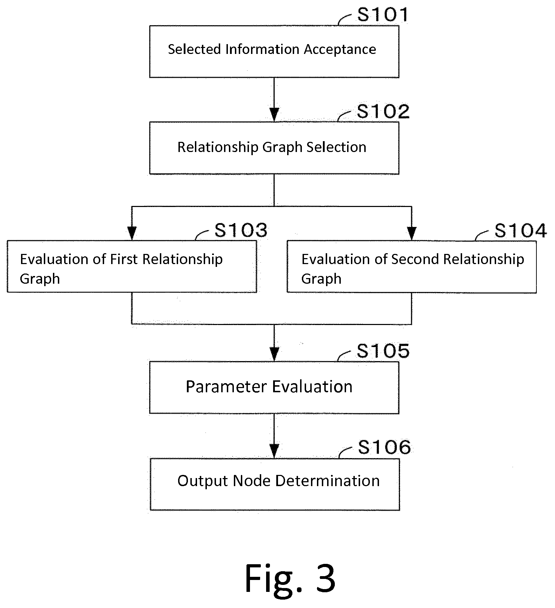

[Parallel Evaluation Method by Processing Server 10] A method of evaluating each relationship graph in parallel will be explained with reference to Fig. 3. Further, in the following explanation, "Step" will be abbreviated as "S".

First, the selected information acceptance unit 101 accepts predetermined selected information via the computer network from the terminal device 40 (S101).

Then, the relationship graph selection unit 102 selects two relationship graphs from each of the relationship graph databases 20 based on the selected information accepted by the selected information acceptance unit 101 (S102).

Then, the relationship graph evaluation unit 103 evaluates each of the relationship graphs in parallel by measuring each of the parameters corresponding to nodes contained in each of the relationship graphs for each relationship graph selected by the relationship graph selection unit 102 (S103, and S104).

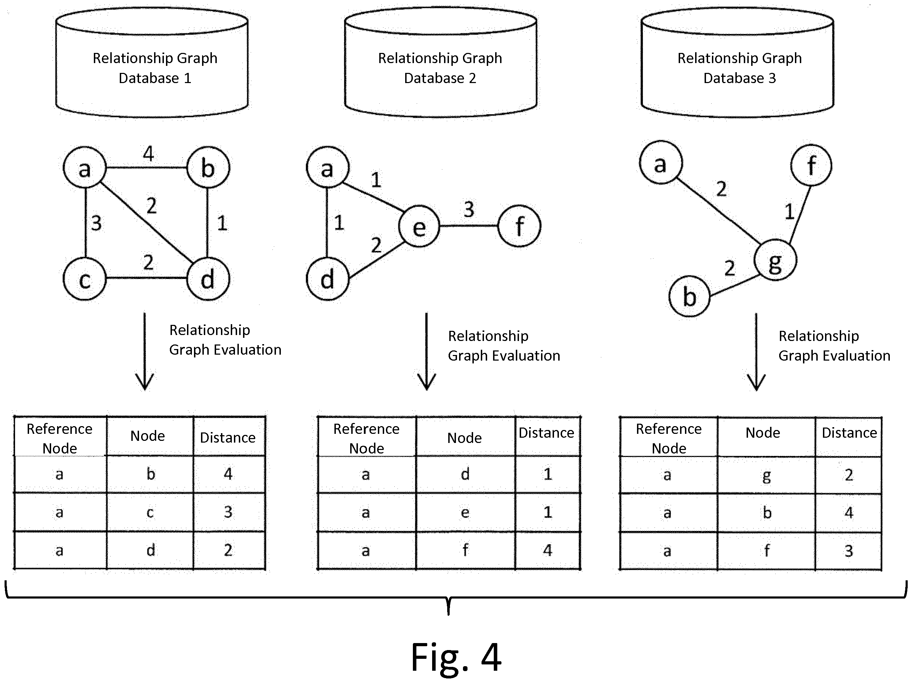

For example, the relationship graph evaluation unit 103, as shown in Fig. 4, for each of the relationship graphs 1 to 3 selected by the relationship graph selection unit 102, after selecting each of the reference point nodes based on the selected information accepted by the selected information acceptance unit 101, it measures the distance from the reference point node to each of the predetermined nodes as a parameter, forms a node list showing the reference point node, each of the predetermined nodes, and the distances (parameters) in a manner as to be sorted by descending or ascending order of the distance, and evaluates the relationship graphs 1 to 3. Further, the distance of each node from the reference point node denotes a link length when it is directly connected to the reference point node and also denotes a path length in which each link length on the path is added when they are connected via another node. Furthermore, the path length can be the shortest path length or an average path length. Also, when a plurality of reference point nodes exist, the path length is obtained as the average value. In addition, the average value of the path length can be mean square, etc.

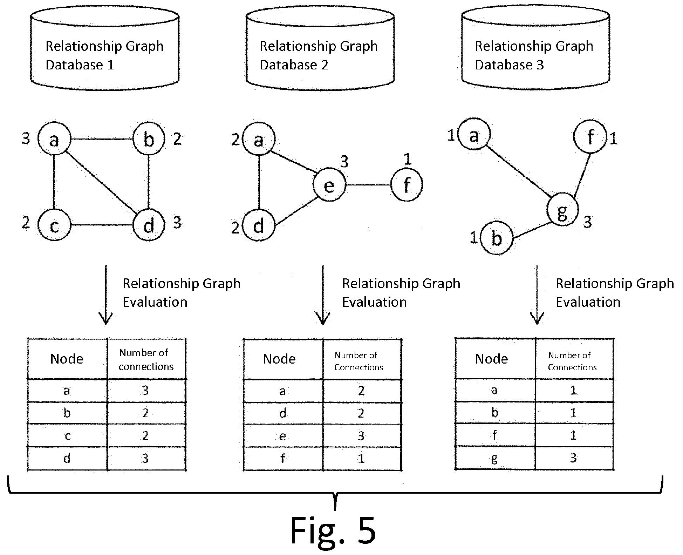

Further, for example, the relationship graph evaluation unit 103, as shown in Fig. 5, for each relationship graph 1 to 3 selected by the relationship graph selection unit 102, measures the number of connections of each of the predetermined nodes as a parameter, creates a node list in which the number of the connections of each of the predetermined nodes and each of the nodes are sorted in the order of the largest to the smallest number, and the first and the second relationship graphs can be evaluated. Further, for example, the number of connections denotes the number of nodes that are directly connected to nodes.

Also, the parameter evaluation unit 104 evaluates while mutually comparing parameters of nodes contained in each relationship graph evaluated by the relationship graph evaluation unit 103 (S105). The specific evaluation method of parameters by the parameter evaluation unit 104 will be explained later in Examples 2 and 3.

Then, the output node determination unit 105 determines the node to be finally output based on the result of evaluation by the relationship graph evaluation unit 103, and outputs it to the terminal device 40 via the computer network (S106).

In this way, in the processing server 10, the evaluation of the relationship graph and the evaluation of parameters of nodes are performed for each relationship graph in parallel. Further, in this embodiment, the evaluation of the relationship graph and the evaluation of the node parameter are performed separately in two, but it may be performed separately in three or more.

### [Serial Evaluation Method by Processing Server 10]

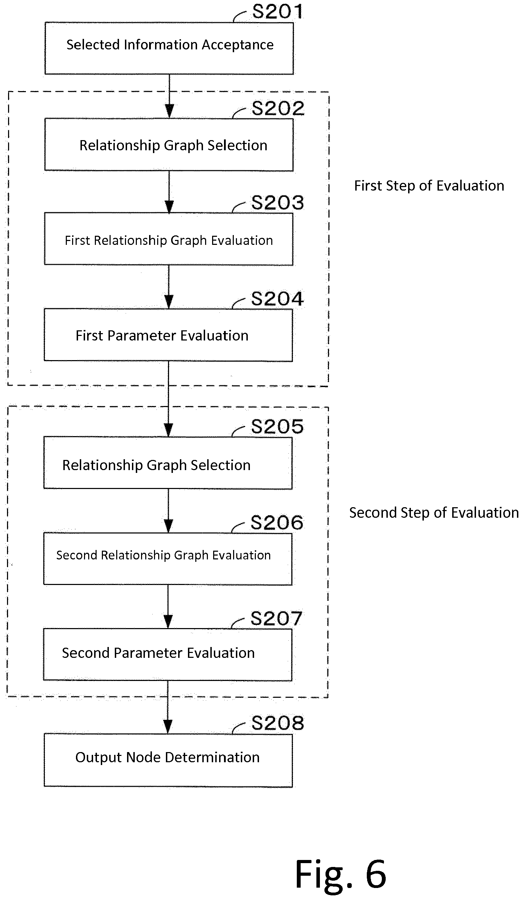

A method of serially evaluating each relationship graph will be explained with reference to Fig. 6. Further, in the following explanation, "Step" will be abbreviated as "S".

First, the selected information acceptance unit 101 accepts predetermined selected information via the computer network from the terminal device 40 (S201).

Then, the relationship graph selection unit 102 selects a first relationship graph from each of the relationship graph databases 20 based on the selected information accepted by the selected information acceptance unit 101 (S202).

Then, the relationship graph evaluation unit 103 evaluates the first relationship graph by measuring the parameters of nodes contained in one of the relationship graphs selected by the relationship graph selection unit 102 (S203).

For example, the relationship graph evaluation unit 103, for the first relationship graphs selected by the relationship graph selection unit 102, after selecting a reference point node based on the selected information accepted by the selected information acceptance unit 101, measures the distance from the reference point node to each of the predetermined nodes as a parameter, creates a node list showing the distance (parameter) from the reference point node to each of the predetermined nodes in a manner as to be sorted by descending or ascending distance, and evaluates each of the relationship graphs.

Further, for example, the relationship graph evaluation unit 103, for the first relationship graph selected by the relationship graph selection unit 102, measures the number of connections of each of the predetermined nodes as a parameter, creates a node list in which the number of the connections of each of the predetermined nodes and each of the nodes are sorted in the order of the largest number to the smallest number or the smallest number to the largest number, and then the relationship graphs can be evaluated.

Then, the parameter evaluation unit 104 evaluates the parameter of nodes contained in the first relationship graph evaluated by the relationship graph evaluation unit 103 (S204). The specific evaluation method of parameters by the parameter evaluation unit 104 will be explained later in Examples 1, 4 and 5.

Next, the relationship graph selection unit 102 selects the second relationship graphs from each of the relationship graph databases 20 based on the selected information accepted by the selected information acceptance unit 101 (S205).

Then, the relationship graph evaluation unit 103 evaluates another relationship graphs by measuring parameters of nodes contained in the second relationship graph selected by the relationship graph selection unit 102 (S206).

For example, the relationship graph evaluation unit 103, for the second relationship graph selected by the relationship graph selection unit 102, after selecting the reference point node based on the result of evaluation of the aforementioned first parameter by the parameter evaluation unit 104 (for example, the distance from the reference point node to each of the nodes, the number of connections of each node, etc.), measures the distance from the reference point node to each of the predetermined node as a parameter, creates a node list showing the distance (parameter) from the reference point node to each of the predetermined nodes in a manner as to sorted by descending or ascending distance, and evaluates the second relationship graph.

Also, the parameter evaluation unit 104 evaluates the parameter of nodes contained in the second relationship graph evaluated by the relationship graph evaluation unit 103 (S207). The specific evaluation method of parameters by the parameter evaluation unit 104 will be explained later in Examples 1, 4 and 5.

Then, the output node determination unit 105 determines the node to be finally output based on the results of evaluation of parameters of nodes by the relationship graph evaluation unit 103, and outputs it to the terminal device 40 via the computer network (S208).

In this way, after the processing server 10 performs the evaluation of the first relationship graph and the evaluation of parameters (first step evaluation), based on that, by performing the evaluation of the second relationship graph and the evaluation of parameters of nodes (second step evaluation), the evaluation of the first and second relationship graphs are performed serially. Further, in this embodiment, the evaluation of the relationship graph and the evaluation of parameters are performed in two steps, but it may be performed in three steps.

### [Example 1] (Serial/Distance, Use of Connection Number)

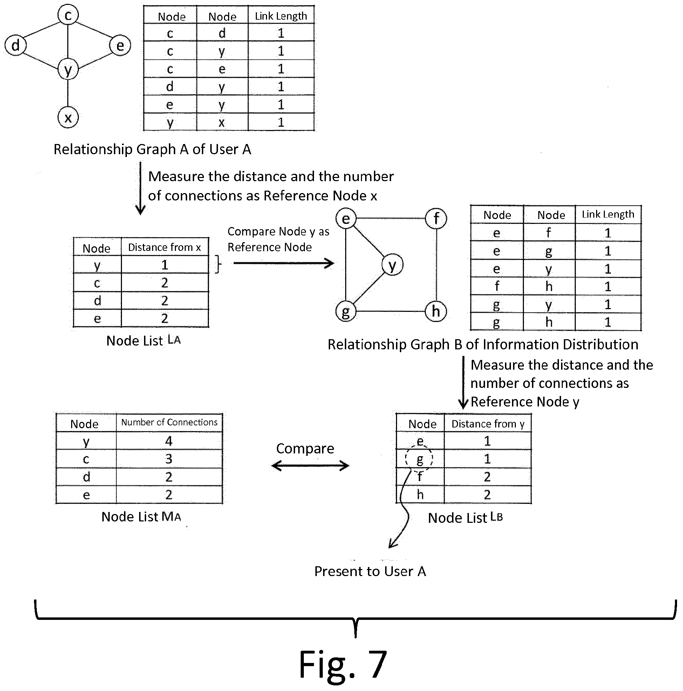

In this Example, as shown in Fig. 7, a case in which a relationship graph A created using the information viewing history of the terminal device 40, such as, e.g., a mobile terminal, of a user A as an input source and a relationship graph B created using information on a website of an information distribution service B as an input source are serially and mutually linked will be specifically explained. Further, the distance from a certain reference point node x to each node in the relationship graphs A and B and the number of connections of each node are used as a parameter of each node.

When a user A selects a location x where the user is currently present, the selected information of the user A including the location x is transmitted to the processing server 10 via the computer network from the terminal device 40 of the user A. This selected information of the user A includes information relating to the selected location x where the user A is currently present and information indicating to select the relationship graph A of the user A and the relationship graph B of the information distribution service B.

In the processing server 10, after the selected information acceptance unit 101 accepts the selected information of the user A transmitted from the terminal device 40 of the user A via the computer network, the relationship graph selection unit 102 selects the relationship graph A of the user A among each of the relationship graph databases 20 based on the selected information accepted by the selected information acceptance unit 101.

Then, the relationship graph evaluation unit 103 evaluates the relationship graph A by measuring the parameters corresponding to nodes contained in the relationship graph A for the relationship graph A of the user A selected by the relationship graph selection unit 102.

Specifically, the relationship graph evaluation unit 103 selects the reference point node x of the relationship graph A based on the location x of the selected information accepted by the selected information acceptance unit 101 (selection of the first reference point node). Then, the relationship graph evaluation unit 103 measures the distance from the reference point node x to each of the predetermined nodes as a parameter for the relationship graph A, and creates a node list LA showing each of the nodes and the distances from the reference point node x to each of the nodes in a manner as to be sorted by descending order or ascending order of the distance. Furthermore, the relationship graph evaluation unit 103 measures the number of connections of each node in relationship graph A and also creates a node list MA showing each node and the number of connections of each node in a manner as to be sorted by descending order or ascending order of the number (measurement of the first parameter).

Then, the parameter evaluation unit 104, in the node list LA of the relationship graph A created by the measurement of the first parameter, evaluates the node y having the smallest distance from the reference point node x as a reference point node used for evaluating the next relationship graph (evaluation of the first parameter).

Next, the relationship graph selection unit 102 selects the relationship graph B of the information distribution service B from each of the relationship graph databases 20 based on the selected information accepted by the selected information acceptance unit 101.

Then, the relationship graph evaluation unit 103 evaluates the relationship graph B by measuring the parameters of nodes contained in the relationship graph B for the relationship graph B of the information distribution service B selected by the relationship graph selection unit 102.

Specifically, the relationship graph evaluation unit 103 selects the reference point node y of the relationship graph B based on the node y evaluated by the first parameter evaluation unit 104 (selection of the second reference point node). Then, the relationship graph evaluation unit 103 measures the distance from the reference point node y to each of the predetermined nodes as parameters for the relationship graph B, and creates a node list LB showing each of the nodes and the distances from the reference point node x to each of the nodes in a manner as to be sorted by descending order or ascending order of the distance (measurement of the second parameters).

Then, the parameter evaluation unit 104 mutually compares the node list MA of the relationship graph A created by measuring the first parameter in the relationship graph evaluation unit 103 and the node list LB of the relationship graph B created by measuring the second parameter, takes away the nodes displayed on the node list MA from the upper nodes displayed on the node list LB and evaluates them as nodes as candidates to be presented to the user A. That is, since the upper nodes on the node list LB have a strong relationship with y, there is a high possibility that it is a node that the user A needs at the location x. However, since the upper nodes of the node list MA already has many connections on the relationship graph A, it is highly likely that it is known to the user A. Therefore, the node list MA is also referenced, and nodes in which nodes of the node list MA are taken away from the upper nodes of the node list LB are evaluated as nodes (g, f, h) needed by the user A at the location x and unknown to the user A.

Then, the output node determination unit 105 determines a final node (for example, g) to be presented to the user C among "the nodes (g, f, h) needed by the user A at the location x and unknown to the user A" evaluated by the parameter evaluation unit 104, transmits them to the terminal device 40 of the user A via the computer network by converting them to the original objects (contents) and displays them on the terminal device 40 of the user A.

### [Example 2] (Parallel/Using Distance)

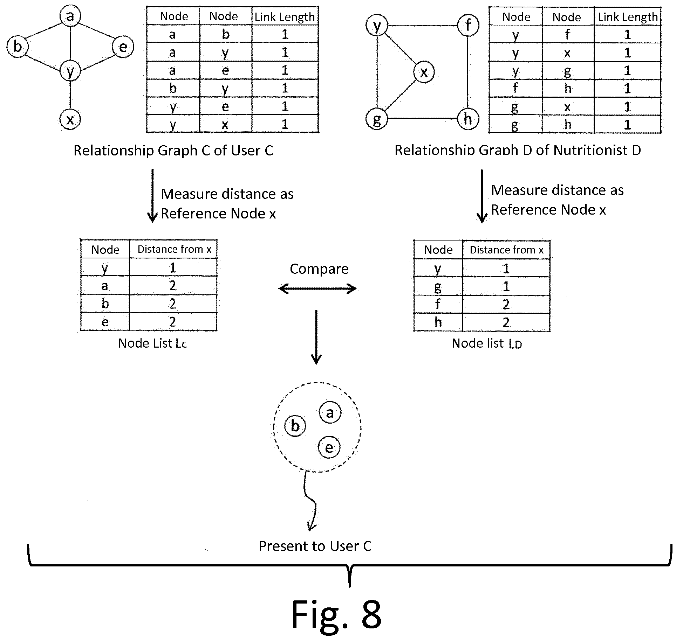

In this Example, as shown in Fig. 8, a case in which a relationship graph C created using the record of foods that a user C had eaten daily as an input source and a relationship graph D created using information on a website relating the poor compatibility of foods sent by a nutritionist D as an input source are mutually linked in parallel will be specifically explained. Further, the distance from a reference point node x to each of the nodes in the relationship graphs C and D is used as parameters of each of the nodes.

When a user C selects a food x that the user wants to eat at the moment, selected information of the user C including the food x is transmitted to the processing server 10 via the computer network from the terminal device 40 of the user C. This selected information of the user C includes information relating to the food x selected by the user C and information indicating to select the relationship graph C of the user C and the relationship graph D of the nutritionist D.

In the processing server 10, after the selected information acceptance unit 101 accepts the selected information of the user C transmitted from the terminal device 40 of the user C via he computer network, the relationship graph selection unit 102 selects the relationship graph C of the user C and the relationship graph D of the nutritionist D among each of the relationship graph databases 20 based on the selected information accepted by the selected information acceptance unit 101.

Then, the relationship graph evaluation unit 103 evaluates the relationship graphs C and D in parallel by measuring the parameters of nodes contained in each of the relationship graphs C and D for the relationship graph C of the user C and the relationship graph D of the nutritionist D selected by the relationship graph selection unit 102.

Specifically, the relationship graph evaluation unit 103 selects the reference point node x of the relationship graph C based on the food x of the selected information accepted by the selected information acceptance unit 101 (selection of the first reference point node). Then, the relationship graph evaluation unit 103 measures the distance from the reference point node x to each of the predetermined nodes as parameters for the relationship graph C and creates a node list LC showing each of the nodes and the distances from the reference point node x to each of the nodes in a manner as to be sorted by descending order or ascending order of the distance (measurement of the first parameters).

On the other hand, the relationship graph evaluation unit 103 selects the reference point node x of the relationship graph D based on the food x of the selected information accepted by the selected information acceptance unit 101 (selection of the second reference point node). Then, the relationship graph evaluation unit 103 measures the distance from the reference point node x to each of the predetermined nodes as a parameter for the relationship graph D and creates a node list LD showing each of the nodes and the distances from the reference point node x to each of the nodes in a manner as to be sorted by descending order or ascending order of the distance (measurement of the second parameter).

Next, the parameter evaluation unit 104 mutually compares the node list LC of the relationship graph C and the node list LD of the relationship graph D evaluated by the relationship graph evaluation unit 103 in parallel, takes away the duplicate upper nodes displayed on the node list LD from the upper nodes displayed on the node list LC and evaluates them as nodes as candidates to be presented to the user C. In other words, there is a higher possibility that the user C likes a node (food) displayed toward the top of the node list LC when eating the food x, but on the other hand, a node (food) displayed toward the top of the node list LD has poorer compatibility with the food x. Therefore, nodes in which the upper nodes of the node list LD are taken away from the upper nodes of the node list LC are evaluated as nodes (a, b, e) that the user C likes and does not have poor compatibility with the food x.

Then, the output node determination unit 105 determines a final node (for example, a) to be presented to the user C among "the nodes (a, b, e) that the user C likes and does not have poor compatibility with the food x" evaluated by the parameter evaluation unit 104, transmits them to the terminal device 40 of the user C via the computer network by converting them to the original objects (foods), and displays them on the terminal device 40 of the user C.

### [Example 3] (Parallel/Using the Distance, Number of Connections, Time difference)

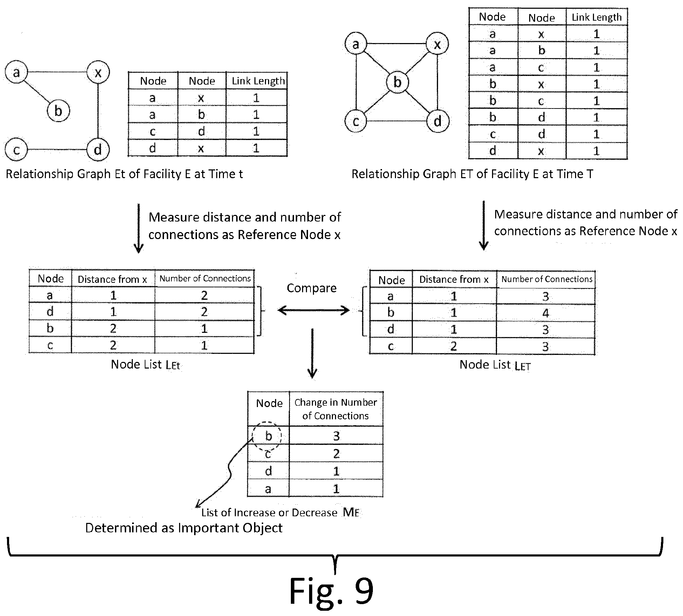

In this Example, as shown in Fig. 9, a case in which a relationship graph Et created using the usage history of a facility E at a time t as an input source and a relationship graph ET created usage history of a facility E at a time T (T>t) as an input source are mutually linked in parallel will be specifically explained. Further, the distance from a certain reference point node x to each of the nodes in the relationship graphs Et and ET and the number of connections of each node are used as parameters of each node.

When a service x that can be used at the facility E is selected, selected information of the facility E including the service x is transmitted to the processing server 10 via the computer network from the terminal device 40 of the facility E. This selected information of the facility E includes information relating to the selected service x of the facility E and information indicating to select the relationship graph Et at a time t and the relationship graph ET at a time T.

In the processing server 10, after the selected information acceptance unit 101 accepts the selected information of the facility E transmitted from the terminal device 40 of the facility E via the computer network, the relationship graph selection unit 102 selects the relationship graph Et of the facility E at a time t and the relationship graph ET of at a time T among each of the relationship graph databases 20 based on the selected information accepted by the selected information acceptance unit 101.

Then, the relationship graph evaluation unit 103 evaluates the relationship graphs Et and ET in parallel by measuring the parameters corresponding to the nodes contained in each of the relationship graphs Et and ET for the relationship graph Et of at a time t and the relationship graph ET at a time T selected by the relationship graph selection unit 102.

Specifically, the relationship graph evaluation unit 103 selects the reference point node x of the relationship graph Et based on the service x of the selected information accepted by the selected information acceptance unit 101 (selection of the first reference point node). Then, the relationship graph evaluation unit 103 measures the distance from the reference point node x to each of the predetermined nodes as parameters for the relationship graph Et, as well as the number of connections of each of the nodes as parameters, and creates a node list LEt showing each of the nodes, the distances from the reference point node x to each of the nodes, and the number of connections of each node in a manner as to be sorted by descending order or ascending order of the distance (measurement of the second parameter).

On the other hand, the relationship graph evaluation unit 103 selects the reference point node x of the relationship graph ET based on the service x of the selected information accepted by the selected information acceptance unit 101 (selection of the second reference point node). Then, the relationship graph evaluation unit 203 measures the distance from the reference point node x to each of the nodes as parameters for the relationship graph Et, as well as the number of connections of each of the nodes as parameters, and creates a node list LET showing each of the nodes, the distances from the reference point node x to each of the nodes, and the number of connections of each node in a manner as to be sorted by descending order or ascending order of the distance (measurement of the second parameter).

Next, the parameter evaluation unit 104 mutually compares the node list LEt of the relationship graph Et and the node list LET of the relationship graph ET evaluated by the relationship graph evaluation unit 103 in parallel, extracts the upper nodes displayed on the node list LEt and the node list LET, creates a new node list ME in which the increase and decrease of the number of connections in the node list LET with respect to the number of connections in the node list LEt are sorted in descending order for those upper nodes, and evaluates them as nodes as candidates to be presented to the facility E. In other words, since the nodes (services) displayed toward the top of the node lists LEt and LET are more likely to have a strong relationship to the service x, the node displaying a large change among the nodes (services) having a strong relationship with these services x will be evaluated as important nodes (b, c, d, a).

Then, the output node determination unit 105 selects a final node (for example, b) to be presented to the facility E among "the nodes (b, c, d, a) that showed a big change" evaluated by the parameter evaluation unit 104, transmits them to the terminal device 40 of the facility E via the computer network by converting them to the original objects (services) and displays them on the terminal device 40 of the facility E.

### [Example 4] (Serial/Using the Distance, Number of Connections)

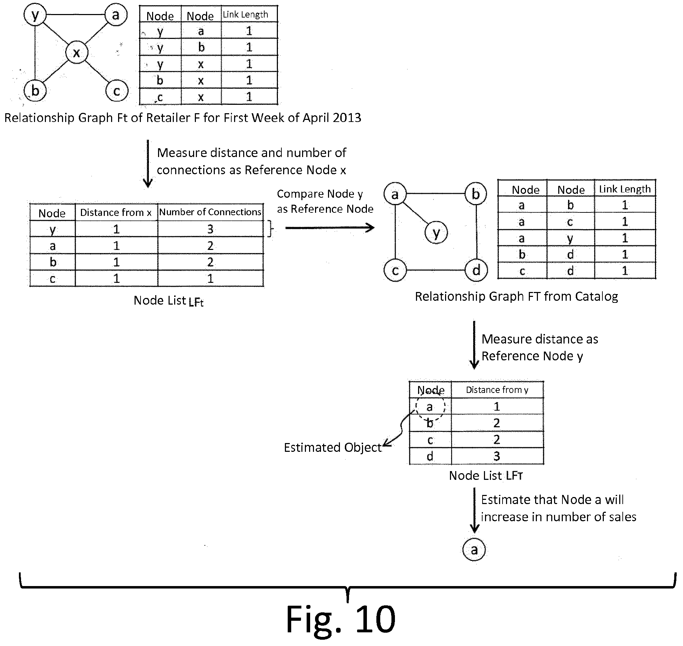

In this Example, as shown in Fig. 10, a case in which a relationship graph Ft created using a sales record of products for a retailer F during the first week of April, 2013 as an input source and a relationship graph FT created using the products published on a product catalog in 2013 as an input source are serially and mutually linked will be specifically explained. Further, the distance from a certain reference point node x to each of the nodes in the relationship graphs Ft and FT and the number of the connections of each node are used as parameters of each node.

When the retailer F selects a store x, the selected information of the retailer F including the store x is transmitted to the processing server 10 via the computer network from the terminal device 40 of the retailer F including the store x. This selected information of the retailer F includes information relating to the selected store x selected by the retailer F and information indicating to select the relationship graph Ft of the retailer F and the relationship graph FT of the product catalog.

In the processing server 10, after the selected information acceptance unit 101 accepts the selected information of the retailer F transmitted from the terminal device 40 of the retailer F via the computer network, the relationship graph selection unit 102 selects the relationship graph Ft of the retailer F among each of the relationship graph databases 20 based on the selected information accepted by the selected information acceptance unit 101.

Then, the relationship graph evaluation unit 103 evaluates the relationship graph Ft by measuring the parameters corresponding to nodes contained the relationship graph Ft for the relationship graph Ft of the retailer F selected by the relationship graph selection unit 102.

Specifically, the relationship graph evaluation unit 103 selects the reference point node x of the relationship graph Ft based on the retailor x of the selected information accepted by the selected information acceptance unit 101 (selection of the first reference point node). Then, the relationship graph evaluation unit 103 measures the distance from the reference point node x to each of the predetermined nodes as parameters for the relationship graph Ft, as well as the number of connections of each of the nodes as parameters, and creates a node list LFt showing the distances from the reference point node x to each of the nodes, and the number of connections of each node sorted by ascending order of distance or descending order of the number of connections (measurement of the second parameter).

Then, the parameter evaluation unit 104, in the node list LFt of the relationship graph Ft evaluated by the relationship graph evaluation unit 103, evaluates the node y having the smallest distance from the reference point node x and the largest number of connections as the reference point node used for evaluating the next relationship graph.

Next, the relationship graph selection unit 102 selects the relationship graph FT of the catalog from each of the relationship graph databases 20 based on the selected information accepted by the selected information acceptance unit 101.

Then, the relationship graph evaluation unit 103 evaluates the relationship graph FT by measuring parameters corresponding to nodes contained in the relationship graph FT for the relationship graph FT of the catalog selected by the relationship graph selection unit 102.

Specifically, the relationship graph evaluation unit 103 selects the reference point node y of the relationship graph FT based on the node y evaluated by the first parameter evaluation unit 104 (selection of the second reference point node). Then, the relationship graph evaluation unit 103 measures the distance from the reference point node y to each of the predetermined nodes as parameters for the relationship graph FT and creates a node list LFT showing the distances from the reference point node x to each of the nodes in a manner as to be sorted by descending order or ascending order of the distance (measurement of the second parameter).

Next, the parameter evaluation unit 104 refers to the node list LFT of the relationship graph FT evaluated by the relationship graph evaluation unit 103 and evaluates the upper nodes displayed on the node list LFT as nodes as candidates to be presented to the retailer F. In other words, since the upper nodes in the node list LFt gets a high degree of attention at the store x and the upper nodes on the node list FT are products having a strong relationship with the service y, these upper nodes (a, b, c) are evaluated as objects (products) that are predicted to increase in sales in the future.

Then, the output node determination unit 105 selects a final node (for example, a) to be presented to a retailer among "the nodes (a, b, c) predicted to increase in sales in the future" evaluated by the parameter evaluation unit 104, transmits them to the terminal device 40 of the retailer F via the computer network by converting them to the original objects (products), and displays them on the terminal device 40 of the retailer F.

### [Example 5] (Serial/Using Reliability)

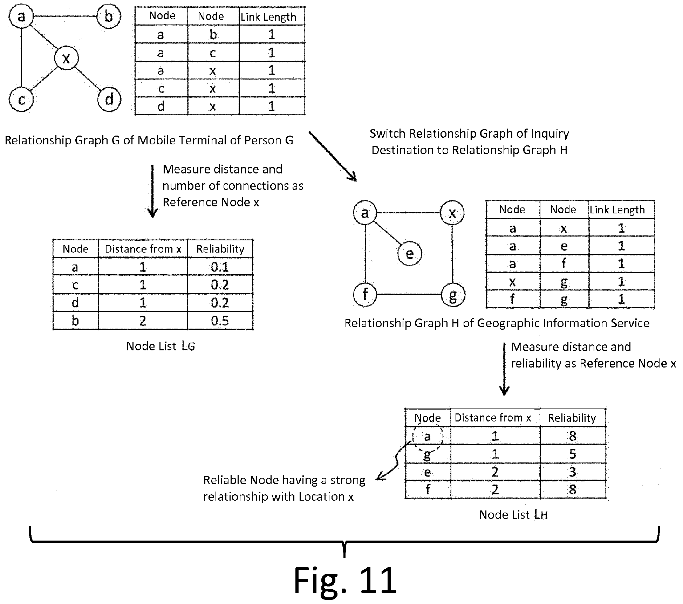

In this Example, as shown in Fig. 11, a case in which a relationship graph G created using the usage history of the terminal device 40 such as a mobile terminal, etc., of a user G as an input source and a relationship graph H created using geographic information service H used by many consumers as an input source are serially and mutually linked will be specifically explained. Further, the distance from a reference point node x to each of the nodes in the relationship graphs G and H and the reliability of each node are used as parameters of each node.

When a user G selects a location x, the selected information of the user G including the location x is transmitted to the processing server 10 via the computer network from the mobile terminal of the user A. This selected information of the user G includes information relating to the location x selected by the user G, information indicating to select the relationship graph G of the user G, and information indicating that there is a possibility of selecting the relationship graph H of the geographic information service H.

In the processing server 10, after the selected information acceptance unit 101 accepts the selected information of the user G transmitted from the terminal device 40 of the user G via the computer network, the relationship graph selection unit 102 selects the relationship graph G of the user G among each of the relationship graph databases 20 based on the selected information accepted by the selected information acceptance unit 101.

Then, the relationship graph evaluation unit 103 evaluates the relationship graph G by measuring parameters corresponding to nodes contained the relationship graph G for the relationship graph G of the user G selected by the relationship graph selection unit 102.

Specifically, the relationship graph evaluation unit 103 selects the reference point node x of the relationship graph G based on the location x of the selected information accepted by the selected information acceptance unit 101 (selection of the first reference point node). Then, the relationship graph evaluation unit 103 measures the distance from the reference point node x to each of the predetermined nodes as parameters for the relationship graph G, as well as the reliability of each of the nodes as a parameter, and creates a node list LG showing the distances from the reference point node x to each of the nodes, and the reliability of each node sorted by ascending order of distance and ascending order of the reliability (measurement of the first parameter).

Further, the reliability of the nodes, for example, is an indicator relating to the reliability determined by the latest update date and/or the recent update frequency of links connected to the node, and the reliability is evaluated as high as the updates are newer and more frequent.

Then, the parameter evaluation unit 104, in the node list LG of the relationship graph LG evaluated by the relationship graph evaluation unit 103, selects the node (a, c, d) having the smallest distance from the reference point node x, but evaluates their reliability as low. In other words, if the reliability of the node within a certain distance from the reference point node x is low, even if its relationship to x is strong, the relationship is old or sparse, and therefore the nodes are evaluated not to be used.

Next, since the nodes in the relationship graph G were evaluated not to be used in the aforementioned first step of the evaluation, the relationship graph selection unit 102 selects the relationship graph H of the geographic information service H from each of the relationship graph databases 20 based on the selected information accepted by the selected information acceptance unit 101.

Then, the relationship graph evaluation unit 103 evaluates the relationship graph H by measuring parameters corresponding to nodes contained the relationship graph H for the relationship graph H of the geographic information service H selected by the relationship graph selection unit 102.

Specifically, the relationship graph evaluation unit 103 selects the reference point node x of the relationship graph H based on the selected information accepted by the selected information acceptance unit 101 (selection of the second reference point node). Then, the relationship graph evaluation unit 203 measures the distance from the reference point node x to each of the predetermined nodes as parameters for the relationship graph H, as well as the reliability of each of the nodes as a parameter, and creates a node list LH showing each node, the distances from the reference point node x to each of the nodes, and the reliability of each node sorted by ascending order of distance and ascending order of the reliability (measurement of the second parameter).

Next, the parameter evaluation unit 104 refers to the node list LH of the relationship graph H evaluated by the relationship graph evaluation unit 103 and evaluates the upper nodes displayed on the node list LH as nodes as candidates to be presented to the user G. In other words, since the geographic information service H is used by many consumers, all nodes on the node list LH have high reliability. Therefore, the upper nodes (a, g) on the node list LH are evaluated to be nodes having a strong relationship with the location x and which can be relied on.

Then, the output node determination unit 105 selects the final node (for example, a) to be presented to the user G among "the nodes (a, g) having a strong relationship with the location x and which can be trusted" evaluated by the parameter evaluation unit 104, transmits them to the terminal device 40 of the user G via the computer network by converting them to the original objects and displays them on the terminal device 40 of the user G.

In the above description, the embodiments of the present invention were explained with reference to the drawings, but the present invention is not limited to the illustrated embodiments. For the illustrated embodiments, various modifications and variations may be added within the same range or equivalent range of the present invention.

### [Description of Reference Symbols]

- 1: present system
- 10: processing server
- 101: selected information acceptance unit
- 102: relationship graph selection unit
- 103: relationship graph evaluation unit
- 104: parameter evaluation unit

- 105: output node determination unit
- 20: relationship graph database
- 30: cache server
- 40: terminal device

## Claims

1. A relationship graph interlinkage system configured to mutually link a plurality of relationship graphs connecting a plurality of nodes with links, comprising:
a plurality of relationship graph databases configured to store the plurality of relationship graphs respectively;
a selected information acceptance unit configured to accept selected information from a terminal device via a computer network;
a relationship graph selection unit configured to select a plurality of the relationship graphs from the relationship graph databases based on the selected information accepted by the selected information acceptance unit;
a relationship graph evaluation unit configured to evaluate each relationship graph by measuring a parameter of a node contained in each relationship graph selected by the relationship graph selection unit;
a parameter evaluation unit configured to evaluate the parameter of the node contained in each relationship graph evaluated by the relationship graph evaluation unit; and
an output node determination unit configured to determine a node to be output to the terminal device via the computer network based on a result of evaluation of the parameter by the parameter evaluation unit.

2. The relationship graph interlinkage system as recited in claim 1,
wherein the relationship graph evaluation unit selects a reference point node which becomes a reference point from the nodes contained in the relationship graphs, and measures a distance from the reference point node to each predetermined node as a parameter.

3. The relationship graph interlinkage system as recited in claim 2,
wherein the relationship graph evaluation unit creates a node list showing each predetermined node and distances from the reference point node to each predetermined node in a manner as to be sorted by descending order or ascending order of the distance.

4. The relationship graph interlinkage system as recited in claim 3,
wherein, when evaluating the distance of each node contained in each relationship graph evaluated by the relationship graph evaluation unit, the parameter evaluation unit mutually compares the node list of each relationship graph and extracts a node by subtracting an upper node in another node list from an upper node in one node list.

5. The relationship graph interlinkage system as recited in claim 1,
wherein the relationship graph evaluation unit measures a number of connections of each predetermined node contained in the relationship graph as a parameter.

6. The relationship graph interlinkage system as recited in claim 5,
wherein the relationship graph evaluation unit creates a node list showing each node and a number of connections of each node in a manner as to be sorted by descending order or ascending order of the number.

7. The relationship graph interlinkage system as recited in claim 6,
wherein, when evaluating the number of connections of each node contained in each relationship graph evaluated by the relationship graph evaluation unit, the parameter evaluation unit mutually compares the node list of each relationship graph and extracts a node which is larger in increase or decrease in the number of connections of another list with respect to the number of connections of one node list.

8. The relationship graph interlinkage system as recited in claim 1,
wherein the relationship graph evaluation unit measures reliability of each predetermined node contained in the relationship graphs as a parameter.

9. The relationship graph interlinkage system as recited in claim 8,
wherein the relationship graph evaluation unit creates a node list showing each node and reliability of each node in a manner as to be sorted by descending order or ascending order of the reliability.

10. The relationship graph interlinkage system as recited in claim 9,
wherein, when evaluating the reliability of each node contained in the relationship graph evaluated by the relationship graph evaluation unit, the parameter evaluation unit mutually evaluates that the relationship graph should not be employed when the reliability of each node is low.

11. The relationship graph interlinkage system as recited in claim 1,
wherein the relationship graph evaluation unit evaluates each relationship graph selected by the relationship graph selection unit in parallel, and
wherein the parameter evaluation unit mutually evaluates the parameter of the node contained in each relationship graph evaluated in parallel by the relationship graph evaluation unit.

12. The relationship graph interlinkage system as recited in claim 1,
wherein the relationship graph evaluation unit evaluates one relationship graph selected by the relationship graph selection unit, and the parameter evaluation unit evaluates the parameter of the node contained in the one relationship graph evaluated by the relationship graph evaluation unit, and thereafter
the relationship graph evaluation unit evaluates another relationship graph selected by the relationship graph selection unit based on a result of evaluation of the parameter of the node contained in the one relationship graph evaluated by the relationship graph evaluation unit, and the parameter evaluation unit evaluates the parameter of the node contained in the another relationship graph evaluated by the relationship graph evaluation unit.
